# EUROPÄISCHE PATENTSCHRIFT

(11) **EP 3 619 472 B1**
(45) Veröffentlichungstag und Bekanntmachung des Hinweises auf die Patenterteilung: **20.03.2024**
(21) Anmeldenummer: 18717599.7
(22) Anmeldetag: 12.04.2018
(51) Int. Cl.: F24C 7/08, F24C 15/02, F25D 23/02, F25D 27/00, H05B 6/64, D06F 39/00, A47L 15/42, F25D 29/00

(54) **HAUSHALTSGERÄT MIT BELEUCHTUNGSEINRICHTUNG FÜR GRIFFMULDE UND VERFAHREN ZUM BETREIBEN EINES HAUSHALTSGERÄTS**
HOUSEHOLD APPLIANCE COMPRISING LIGHTING DEVICE FOR RECESSED HANDLE AND METHOD OF OPERATING A HOUSEHOLD APPLIANCE
APPAREIL MÉNAGER AVEC DISPOSITIF D'ÉCLAIRAGE POUR POIGNÉE ENCASTRÉE ET MÉTHODE DE MISE EN OEUVRE D'UN APPAREIL MÉNAGER

(30) Priorität: 01.05.2017 DE 102017004136
(43) Veröffentlichungstag der Anmeldung: 11.03.2020
(73) Patentinhaber: BSH Hausgeräte GmbH, 81739 München (DE)
(72) Erfinder: STAUD, Ralph, 81667 München (DE); TISCHER, Thomas, 85540 Haar (DE); REITWIESSNER, Marco, 81541 München (DE); KESSLER, Andreas, 81827 München (DE); KORTE, Andreas, 81673 München (DE); OTT, Thomas, 85579 Neubiberg (DE); GEROLD, Günter, 73479 Ellwangen (DE); SACHON, Robert, 80469 München (DE)
(86) Internationale Anmeldenummer: PCT/EP2018/059374
(87) Internationale Veröffentlichungsnummer: WO 2018/202398

(56) Entgegenhaltungen:
- EP-A1- 3 043 131
- WO-A1-2006/069831
- WO-A1-2013/126946
- WO-A2-2014/160908
- CN-A- 106 546 051

## Beschreibung

Die Erfindung betrifft ein Haushaltsgerät, das eine Tür mit einer Griffmulde und eine Beleuchtungseinrichtung zur Einstrahlung von Licht auf die Griffmulde aufweist. Die Erfindung betrifft auch ein Verfahren zum Betreiben eines solchen Haushaltsgeräts. Die Erfindung ist insbesondere vorteilhaft anwendbar auf Kältegeräte wie Kühlschränke, Gefriergeräte, Frischhaltegeräte oder Kombinationen davon.

WO 2013/126946 A1 offenbart eine Gerätebeleuchtungsvorrichtung, wobei die Vorrichtung ein Profilelement aufweist, das einen Teil einer Tür, Schublade oder Wand eines Geräts bildet oder damit verbunden ist, wobei das Profilelement einen von einer Außenseite der Tür, Schublade oder Wand zugänglichen Hohlraum aufweist, um ein lichtemittierendes Mittel aufzunehmen. Mit Hilfe des lichtemittierenden Mittels kann der Hohlraum des Profilelements ausgeleuchtet werden.

Die EP 3 043 131 A1 offenbart eine Vorrichtung, umfassend ein Vorrichtungsgehäuse mit einer Zugangsöffnung, einem Verschlusselement, einer Griffaussparung, die in dem Verschlusselement ausgebildet ist. Ferner sind eine Mensch-Maschine-Schnittstelle und mindestens eine Lichtquelle vorgesehen. Die Lichtquelle kann die Griffaussparung beleuchten.

Die CN 106 546 051 A offenbart einen Kühlschrank mit einem Kühlschrankkörper, einer an dem Kühlschrankkörper verschiebbar geführten Schubladentür, einem Antriebssystem zum Öffnen der Schubladentür und einem induktiven Schalter zum Auslösen des Antriebssystems. Der induktive Schalter ist in einem Griff der Schubladentür vorgesehen und kann ein Objekt im Induktionsbereich des induktiven Schalters detektieren.

Die WO 2006/069831 A1 offenbart ein Haushaltsgerät mit einer in einer Tür angeordneten Lichtquelle, die in einer Griffmulde einer Betätigungshandhabe eine Projektion auf eine Projektionsfläche erzeugt, um den Benutzer den Status des Betriebszustandes anzuzeigen.

Die WO 2014/160908 A2 offenbart einen Berührungssensor mit einem Gehäuse, einem in dem Gehäuse montierten Lichtleiter, der Lichtleiter beinhaltet eine Öffnung, durch die Licht austritt und in den Lichtleiter eintritt. Ferner sind in dem Gehäuse ein Lichtsender zum Aussenden von Lichtstrahlen in den Lichtleiter und ein Lichtempfänger zum Empfangen von Lichtstrahlen vorgesehen.

Es ist die **Aufgabe** der vorliegenden Erfindung, die Nachteile des Standes der Technik zumindest teilweise zu überwinden und insbesondere ein Haushaltsgerät mit einer Griffmulde bereitzustellen, das eine besonders hochwertige Anmutung aufweist und besonders nutzerfreundlich ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgerät, aufweisend eine Tür mit einer Griffmulde und eine Beleuchtungseinrichtung zur Einstrahlung von Licht auf die Griffmulde, wobei die Beleuchtungseinrichtung eine Projektionseinrichtung zur Projektion von Information auf die Griffmulde aufweist.

Erfindungsgemäß ist vorgesehen, dass die Griffmulde als eine Bedieneinrichtung mit mindestens einem Betätigungsbereich zur Bedienung des Haushaltsgeräts eingerichtet ist, wobei mittels der Projektionseinrichtung Beschriftungsinformation auf den Betätigungsbereich für dessen Beschriftung projizierbar ist. Dies ermöglicht eine besonders vielfältige Nutzung der Griffmulde. Die Art der Beschriftungsinformation ist grundsätzlich nicht beschränkt und kann alphanumerische Zeichen (Buchstaben oder Ziffern usw.), Symbole, Bilder usw. umfassen.

Dieses Haushaltsgerät weist den Vorteil auf, dass es besonders kompakt ausgestaltbar ist. Insbesondere kann auf ein eigenständiges Anzeigefeld in der Tür verzichtet werden oder ein solches Anzeigefeld besonders klein gehalten werden. Dies wiederum trägt zu einer besonders klaren und hochwertigen Anmutung. Zudem ermöglicht die Lichtprojektion die Darstellung von Information auf einer großen Zahl von Materialien wie Metall, Leder, Holz, Kunststoff usw. Auf ein Vorsehen eines Bildschirms oder von Segmentanzeigen usw. kann verzichtet werden, so dass auf kostengünstige Weise auch unebene Oberflächen ohne besonderen Aufwand zur Informationsdarstellung nutzbar sind. Zudem lässt sich bei abgeschalteter Projektionseinrichtung eine einheitlich wirkende Griffmulde erreichen.

Das Haushaltsgerät kann ein Haushalts-Großgerät sein, beispielsweise ein Kühlgerät (z.B. ein Kühlschrank, Gefriergerät, Frischhaltegerät usw. oder eine beliebige Kombination davon), ein Geschirrbehandlungsgerät (z.B. ein Geschirrspüler, Sterilisator usw. oder eine beliebige Kombination davon), ein Gargerät (z.B. ein Backofen, Mikrowellenofen, Dampfgarer usw. oder eine beliebige Kombination davon) usw. Das Haushaltsgerät kann eine oder mehrere Türen aufweisen, insbesondere mehrere Türen wie oben beschrieben.

Unter einer Griffmulde kann insbesondere eine in die Tür eingebrachte Vertiefung oder Mulde verstanden werden, in welche ein Nutzer zumindest zum Aufziehen der Tür eingreift. Die Griffmulde befindet sich insbesondere im Bereich eines Türrands, der einer Dreh- oder Schwenkachse gegenüberliegt. Die Griffmulde ist insbesondere länglich entlang einer Erstreckung des Türrands ausgebildet. Die Griffmulde kann sich über praktisch die gesamte Länge des Türrands erstrecken. Die Griffmulde kann profilartig geformt sein. Sie kann insbesondere als ein Profilelement ausgebildet sein, das einen Teil einer Tür des Haushaltsgeräts bildet oder damit verbunden ist.

Die Projektionseinrichtung ist also dazu eingerichtet und angeordnet, lichtbasierte Information auf die Griffmulde zu projizieren. Die Projektionseinrichtung kann dazu eine oder mehrere Lichtquellen aufweisen. Das Haushaltsgerät kann mehrere Griffmulden und/oder mehrere Projektionseinrichtungen aufweisen.

Die Information kann mindestens ein grafisches Element wie ein grafisches Zeichen (z.B. ein Symbol, einen Buchstaben, eine Zahl usw.), mindestens ein abstraktes geometrisches Objekt (z.B. einen Kreis, ein Rechteck usw.) und/oder mindestens ein Abbild eines gegenständlichen Objekts (z.B. ein Lebensmittel, eine Skala, Eiswürfel usw.) umfassen.

Dass Information "auf" die Griffmulde projizierbar ist, kann umfassen, dass die Information in die Griffmulde bzw. deren Hohlraum hinein und/oder auf eine Griffkante der Griffmulde projizierbar ist. Dass mittels der Projektionseinrichtung Information auf die Griffmulde projizierbar ist, umfasst insbesondere, dass die Information auf eine der Griffmulde zugehörige Projektionsfläche projizierbar ist. Diese Projektionsfläche ist insbesondere nichttransparent, sondern reflektierend ausgebildet, beispielsweise diffus reflektierend. An der Projektionsfläche können sich dauerhaft bzw. nicht mittels Lichts erzeugte grafische Elemente befinden, z.B. aufgedruckte oder eingeprägte grafische Elemente. Diese grafischen Elemente können von der Projektionseinrichtung lokal beleuchtet werden, um sie optisch hervorzuheben. Die Beleuchtung kann dabei z.B. einen entsprechend begrenzten Lichtfleck (Spot), einen Lichtzeiger, eine Korona usw. aufweisen. Diese Ausführungsform fällt jedoch nicht unter den Wortlaut von Anspruch 1.

Es ist eine Weiterbildung, dass die Projektionseinrichtung so ausgebildet und angeordnet ist, dass sie Licht im Bereich der Griffmulde abstrahlt. Dies kann umfassen, dass mittels der Projektionseinrichtung Licht von einem Bereich einer Griffkante der Griffmulde abgestrahlt wird und/oder Licht von einer Wandung des Hohlraums der Griffmulde abgestrahlt wird. Insbesondere kann das Licht von einer Griffkante der Griffmulde auf eine gegenüberliegende Griffkante projiziert werden, Licht von einer Griffkante der Griffmulde in den Hohlraum der Griffmulde projiziert werden, Licht von der Wandung des Hohlraums auf eine Griffkante projiziert werden und/oder Licht von der Wandung des Hohlraums auf einen anderen Bereich der Wandung projiziert werden.

Es ist eine Ausgestaltung, dass die Projektionseinrichtung in die Tür integriert ist. Dadurch wird eine besonders kompakte Anordnung ermöglicht. Zudem kann die Projektionseinrichtung dadurch mit der Griffmulde mitbewegt werden, so dass die Projektion auch bei geöffneter Tür möglich ist.

Es ist eine Weiterbildung, dass die Projektionseinrichtung in einen die Griffmulde aufweisenden Randbereich der Tür integriert ist. So wird eine besonders einfache Montage ermöglicht. Alternativ oder zusätzlich kann sich die Projektionseinrichtung in der Tür, aber entfernt von der Griffmulde befinden und von ihr abgestrahltes Licht mittels mindestens eines Lichtleiters zu der Griffmulde geführt werden.

Es ist noch eine Ausgestaltung, dass die Projektionseinrichtung außerhalb der Griffmulde Licht abstrahlt und von ihr abgestrahltes Licht durch eine Eingriffsöffnung der Griffmulde in die Griffmulde fällt. Dies ermöglicht eine besonders einfache Ausgestaltung der Griffmulde. Die Projektionseinrichtung kann sich dann auch außerhalb der Griffmulde befinden. Alternativ oder zusätzlich kann das Licht der außerhalb der Griffmulde befindlichen Projektionseinrichtung auf eine Griffkante der Griffmulde fallen. Diese Projektionseinrichtung kann sich z.B. an einer anderen Tür befinden.

So ist es eine Weiterbildung, dass die Projektionseinrichtung sich außerhalb der Tür befindet, deren Griffmulde sie beleuchtet. Die Projektionseinrichtung kann z.B. an einer Tür angeordnet sein, die zu derjenigen Tür benachbart ist, welche die Griffmulde aufweist. Die Tür, welche die Projektionseinrichtung aufweist, und die Tür, welche die Griffmulde aufweist, können Türen eines einzigen Haushaltsgeräts sein. Diese beiden Türen können nebeneinander angeordnet sein, wobei sich die Projektionseinrichtung und die Griffmulde z.B. an gegenüberliegenden vertikalen Türrändern befinden. Die beiden Türen können auch übereinander angeordnet sein, wobei sich die Projektionseinrichtung und die Griffmulde z.B. an gegenüberliegenden horizontalen Türrändern befinden.

Es ist noch eine Ausgestaltung, dass die Projektionseinrichtung mindestens eine Leuchtdiode (LED) aufweist ("LED-Projektor"), der ein bildgebendes Element optisch nachgeschaltet ist. Eine solche Projektionseinrichtung ermöglicht bei geringen Kosten eine hohe Leuchtstärke und ist sehr langlebig. Das bildgebende Element befindet sich in dem Lichtpfad des von der mindestens einen Leuchtdiode abgestrahlten Lichts und prägt dem Licht Information auf, z.B. durch Erzeugung einer Helligkeits- und/oder Farbvariation. In anderen Worten erzeugt das bildgebende Element ein Lichtabstrahlmuster, das die Information trägt oder aufweist.

Das bildgebende Element kann ein reflektierendes Element oder ein transmittierendes (lichtdurchlässiges) Element sein.

Es ist eine weitere Ausgestaltung, dass das bildgebende Element ein statisches Durchlichtelement ist. Dies ermöglicht eine besonders kompakte und preiswerte Anordnung. Das statische Durchlichtelement kann als Dia oder Diapositiv ausgebildet sein.

Es ist noch eine weitere Ausgestaltung, dass das bildgebende Element ein bildvariables Durchlichtelement ist. Dies ermöglicht eine Projektion dynamischer Information. Ein bildvariables Durchlichtelement kann ein Bildschirm, z.B. ein Flüssigkristallbildschirm, sein. Der Bildschirm kann ein bildpunktartig oder segmentartig ansteuerbarer Bildschirm sein.

Die Projektionseinrichtung kann Information allgemein statisch oder dynamisch projizieren. Eine dynamische Projektion kann eine Bewegung, Helligkeitsänderung, Farbänderung usw. des mindestens einen grafischen Elements umfassen.

Es ist ferner eine Ausgestaltung, dass die Projektionseinrichtung mindestens einen Laserprojektor aufweist oder ein Laserprojektor ist. Die Verwendung des Laserprojektors ergibt den Vorteil, dass das von ihm erzeugte Bild aufgrund der schmalen und gering divergenten Laserstrahlen besonders scharf ist, und zwar auch dann, wenn die Einfallswinkel eines von ihm abgestrahlten mindestens einen Laserstrahls auf eine Projektionsfläche nicht konstant oder auch sehr schräg sind. Mittels eines Laserprojektors kann also eine besonders hohe Bildschärfe auch auf uneben und/oder stark schräg ausgerichteten Projektionsflächen erreicht werden. Dies ist besonders vorteilhaft für eine Projektion auf eine Griffmulde mit seinen häufig unebenen Flächen. Dadurch benötigt der Laserstrahl auch keine aufwändige Optik zur Strahlfokussierung und kann besonders kompakt aufgebaut sein. Insbesondere kann der Laserprojektor das Laserlicht fokusfrei projizieren. Der Laserprojektor kann auch als Laserbeamer bezeichnet werden.

Der Laserprojektor kann ein oder mehrere Laserstrahlen aussenden. Die Laserstrahlen können Laserlicht gleicher Farbe oder unterschiedlicher Farbe aufweisen. Der Laserprojektor ermöglicht also grundsätzlich auch eine Darstellung oder Abbildung farbiger Information. Es ist folglich eine Weiterbildung, dass der Laserprojektor ein einfarbiges Licht abstrahlender Laserprojektor ist, z.B. rotes oder grünes Licht. Es ist noch eine Weiterbildung, dass der Laserprojektor ein mehrfarbiges Licht abstrahlender Laserprojektor ist. Das mehrfarbige Licht kann buntes oder unbuntes (z.B. weißes) Licht sein. Dies gilt analog für andere Projektionseinrichtungen.

Allgemein kann sich in einem Lichtpfad des von der Beleuchtungsvorrichtung erzeugten Lichts oder Lichtbündels mindestens ein optisches Element zur Strahlformung befinden, z.B. mindestens eine Linse, mindestens ein Reflektor, mindestens ein Prisma usw.

Unter einem Betätigungsbereich kann allgemein ein Raumbereich oder eine zweidimensionale Fläche ("Oberflächenbereich") verstanden werden. Falls der Betätigungsbereich ein Raumbereich ist, kann unter einem Betätigen des Betätigungsbereichs insbesondere ein Eintauchen eines Objekts in den Raumbereich verstanden werden. Falls der Betätigungsbereich ein Oberflächenbereich ist, kann unter einem Betätigen des Betätigungsbereichs insbesondere ein Berühren des Oberflächenbereichs mittels eines Objekts verstanden werden.

Insbesondere falls der Betätigungsbereich ein Oberflächenbereich ist, kann er als ein berührungsempfindlicher Bereich ("Touchfeld") ausgebildet sein. Ein zugehöriges berührungsempfindliches Feld ("Touchfeld") kann eine Oberfläche der Griffmulde darstellen oder sich unterhalb der freien Oberfläche befinden. Das Touchfeld kann also ein oder mehrere Touchfelder aufweisen. Das Touchfeld kann als eine berührungsempfindliche Folie ("Touchfolie") ausgebildet sein. Das Touchfeld kann ein resistives, kapazitives, induktives usw. Touchfeld sein.

Es ist auch noch eine Ausgestaltung, dass die Griffmulde mehrere berührungsempfindliche Bereiche aufweist, auf welche jeweilige Informationsbereiche projizierbar sind.

Es ist auch eine Ausgestaltung, dass das Haushaltsgerät einen Positionsdetektor zum Erkennen einer Position eines in die Griffmulde eingeführten Objekts aufweist und dazu eingerichtet ist, die Position des in die Griffmulde eingeführten Objekts relativ zu mindestens einem Betätigungsbereich zu bestimmen und eine Aktion auszulösen, falls das Objekt den Betätigungsbereich erreicht. Dies kann auch so ausgedrückt werden, dass eine Aktion ausgelöst wird, wenn das Objekt einen bestimmten Belätigungsbereich betätigt. Die Betätigung kann durch den Positionsdetektor erkannt werden.

Es ist eine Weiterbildung, dass das Haushaltsgerät dazu eingerichtet ist, eine Position des in die Griffmulde eingeführten Objekts relativ zu mehreren Betätigungsbereichen zu bestimmen und eine jeweilige Aktion auszulösen, falls das Objekt einen der Betätigungsbereiche erreicht oder betätigt.

Es ist zudem noch eine Ausgestaltung, dass mehrere Betätigungsbereiche in einer Reihe entlang einer Längserstreckung der Griffmulde angeordnet sind. Dies ergibt den Vorteil, dass die Betätigungsbereiche besonders übersichtlich angeordnet und gut bedienbar sind. Insbesondere können alle Betätigungsbereiche in einer Reihe entlang einer Längserstreckung der Griffmulde angeordnet sein.

Es ist eine Weiterbildung, dass dann, wenn mehrere Betätigungsbereiche in einer Reihe entlang einer Längserstreckung der Griffmulde angeordnet sind, die Projektionseinrichtung mehrere Lichtquellen aufweist, die den mehreren Betätigungsbereichen direkt gegenüber angeordnet sind. Die Projektionseinrichtung kann dann auch als eine Lichtquellenleiste bezeichnet werden. Beispielsweise kann die Lichtquellenleiste mehrere LEDs aufweisen ("LED-Leiste"), denen ein jeweiliges statisches Durchlichtelement nachgeschaltet ist. Durch die LEDs werden Oberflächenbereiche der Griffmulde beleuchtet, die jeweiligen Betätigungsbereichen zugehören oder zugeordnet sind.

Es ist eine Weiterbildung, dass dann, wenn eine Projektionseinrichtung mehrere Lichtquellen aufweist, diese Lichtquellen individuell ansteuerbar sind, insbesondere ihre Helligkeit individuell einstellbar sein. Dies ermöglicht eine besonders klare und übersichtliche Darstellung von Information. Beispielsweise können Betätigungsbereiche heller beleuchtet werden, deren Einstellung(en) aktuell gültig ist oder sind. So können z.B. bei einem Kühlschrank mehrere - z.B. in Reihe angeordnete - Betätigungsbereiche dazu verwendet werden, unterschiedliche Kühlraumtemperaturen einzustellen. Dabei werden Informationen in Form einstellbarer Kühlraumtemperaturen auf oder in jeweilige Betätigungsbereiche projiziert. Betätigt ein Nutzer einen Betätigungsbereich, wird die zugehörige Kühlraumtemperatur eingestellt. Die gerade eingestellte oder aktuelle Kühlraumtemperatur kann dann besonders hell und/oder auf andere Weise hervorgehoben dargestellt werden.

Es ist außerdem eine Ausgestaltung, dass der Positionsdetektor mehrere entlang einer Längserstreckung der Griffmulde angeordnete Lichtschranken aufweist. So lässt mit einem geringen Auswerteaufwand eine Längsposition eines Objekts entlang der Griffmulde mit ausreichender Genauigkeit erfassen. Dies kann beispielsweise dadurch geschehen, dass einer Lichtschranke ein bestimmtes Betätigungselement zugeordnet ist und ein Unterbrechen eines Lichtstrahls der Lichtschranke als ein Betätigen des Betätigungselements aufgefasst wird oder wirkt. Es ist eine für eine verbesserte Bestimmungsgenauigkeit vorteilhafte Weiterbildung, dass mindestens eine Lichtschranke an einem Längsabschnitt der Griffmulde angeordnet ist, an dem sich nur ein Betätigungselement befindet.

Es ist zudem eine Ausgestaltung, dass der Positionsdetektor mindestens einen IR-Sensor aufweist oder ein Infrarot (IR)-Sensor ist. Ein IR-Sensor ermöglicht eine zuverlässige Erkennung einer Position eines Fingers oder anderen Körperteils eines Nutzers und damit auch eine entsprechende Erkennung einer Betätigung. Zudem können mittels des IR-Sensors Fehlbetätigungen weitgehend ausgeschlossen werden. Der IR-Sensor kann ein oder mehrere IR-Elemente (z.B. IR-Dioden) und/oder eine oder mehrere IR-Kameras aufweisen. Beispielsweise können ähnlich zu den Lichtschranken IR-Elemente gegenüber von jeweiligen Betätigungsbereichen angeordnet sein.

Es ist auch noch eine Ausgestaltung, dass der Positionsdetektor mindestens einen Näherungssensor aufweist. Dieser kann z.B. analog zu einem IR-Sensor eingesetzt werden, z.B. angeordnet werden.

Es ist auch noch eine Ausgestaltung, dass der Positionsdetektor mindestens eine Kamera aufweist, mittels welcher eine optische Objekterkennung durchführbar ist.

Die Aufgabe wird auch gelöst durch ein Verfahren zum Betreiben eines Haushaltsgeräts, das eine Tür mit einer Griffmulde und mit einer Projektionseinrichtung zur Einstrahlung von Licht auf die Griffmulde aufweist, wobei bei dem Verfahren mittels der Projektionseinrichtung Information auf die Griffmulde projiziert wird. Das Verfahren kann analog zu dem oben beschriebenen Haushaltsgerät ausgebildet werden und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in einer Schrägansicht einen Ausschnitt aus einem Haushaltsgerät in Form eines Kühlschranks gemäß einem ersten Ausführungsbeispiel gemäß der Erfindung;
- Fig.2A: zeigt in einer Seitenansicht einen Ausschnitt aus Fig.1 im Bereich einer Griffmulde einer Tür des Kühlschranks gemäß dem ersten Ausführungsbeispiel;
- Fig.2B: zeigt in einer Seitenansicht eine Projektionseinrichtung des Kühlschranks gemäß dem ersten Ausführungsbeispiel;
- Fig.3A: zeigt als Schnittdarstellung in Draufsicht einen Ausschnitt aus Fig.1 im Bereich der Griffmulde der Tür des Kühlschranks gemäß dem ersten Ausführungsbeispiel;
- Fig.3B: zeigt als Schnittdarstellung in Draufsicht eine erste Variante der Tür aus Fig.3A;
- Fig.3C: zeigt als Schnittdarstellung in Draufsicht eine zweite Variante der Tür aus Fig.3A;
- Fig.3D: zeigt als Schnittdarstellung in Draufsicht eine dritte Variante der Tür aus Fig.3A;
- Fig.4: zeigt in einer Schrägansicht einen Ausschnitt aus einem Haushaltsgerät in Form eines Kühlgeräts gemäß einem zweiten Ausführungsbeispiel und nicht Gegenstand der vorliegenden Erfindung;
- Fig.5: zeigt als Schnittdarstellung in Draufsicht einen Ausschnitt aus einer Tür eines Kühlgeräts gemäß einem dritten Ausführungsbeispiel gemäß der Erfindung; im Bereich einer Griffmulde; und
- Fig.6: zeigt in einer Schrägansicht einen Ausschnitt aus einem Haushaltsgerät in Form eines Kühlgeräts gemäß einem vierten Ausführungsbeispiel gemäß der Erfindung;

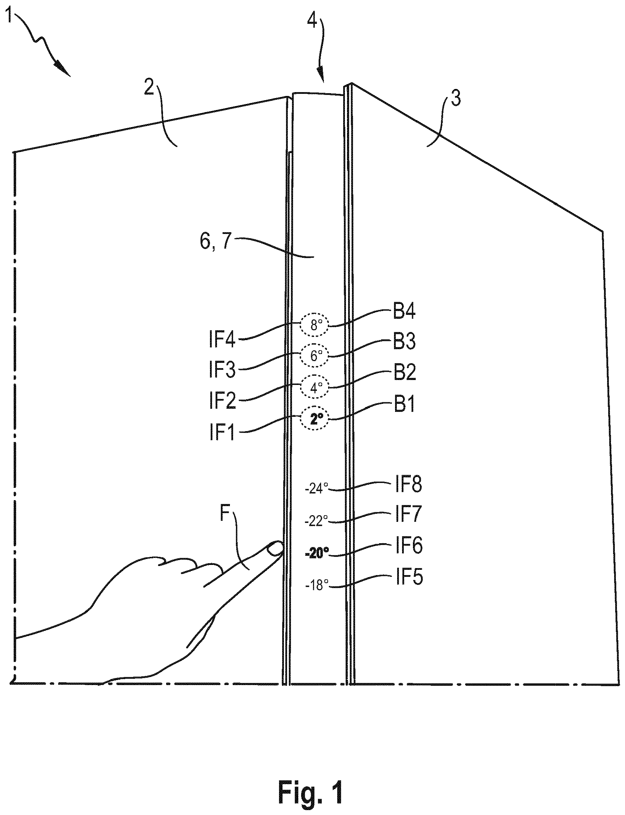

**Fig.1** zeigt in einer Ansicht von schräg vorne links einen Ausschnitt aus einem Haushaltsgerät in Form eines Kühlschranks 1 gemäß einem ersten Ausführungsbeispiel. Der Kühlschrank 1 weist eine frontseitige, rechts an einem Korpus 2 angeschlagene Tür 3 auf, die an ihrem linken Randbereich oder Türrand über eine vertikal durchgängige Griffmulde 4 verfügt.

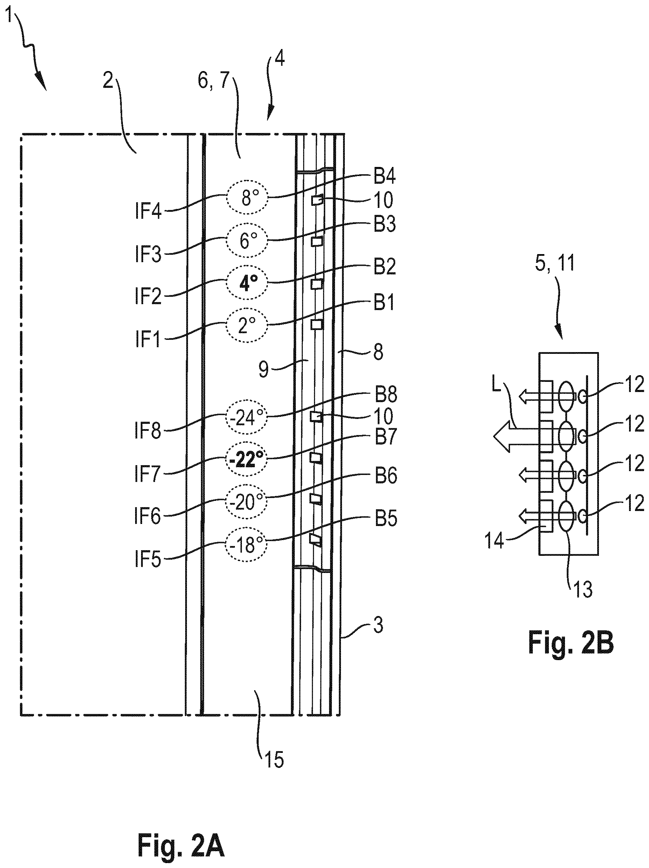

In die Tür 3 ist eine Projektionseinrichtung in Form eines LED-Projektors 5 (siehe Fig.2A und Fig.2B) integriert, welcher dazu dient, Information IF1 bis IF8 in die Griffmulde 4 zu projizieren, und zwar hier auf eine Wandung 6 eines zugehörigen Hohlraums 7. Die Information IF1 bis IF8 entspricht einstellbaren Temperaturwerten. Die Temperaturwerte sind in zwei Gruppen gegliedert, nämlich entsprechend einer ersten Gruppe für Temperaturwerte eines Kühlfachs mit IF1 = 2°, IF2 = 4°, IF3 = 6° und IF4 = 8° und entsprechend einer zweiten Gruppe für Temperaturwerte eines Gefrierfachs mit IF5 = -18°, IF6 = -20°, IF7 = -22° und IF8 = -24°.

Die Informationen IF1 bis IF8 werden in einer geradlinigen Reihe entlang einer vertikalen Längserstreckung der Griffmulde 4 auf die Wandung 6 projiziert, und zwar gruppenweise gegliedert und von unten nach oben in betragsmäßig ansteigenden Temperaturwerten.

Der Kühlschrank 1 weist im Bereich der Griffmulde 4 einen berührungslos arbeitenden Positionsdetektor (o. Abb.) zum Erkennen einer Position eines in die Griffmulde eingeführten Objekts, z.B. eines Fingers F einer Hand eines Nutzers, auf. Dadurch kann eine Position des Fingers F relativ zu Bereichen, an denen die Informationen IF1 bis IF8 auf die Wandung 6 projiziert sind, erfasst werden. Diese gestrichelt angedeuteten Bereiche entsprechen Betätigungsbereichen B1 bis B8 (siehe auch Fig.2A). Folglich sind auch die Betätigungsbereiche B1 bis B8 in einer Reihe entlang der Längserstreckung der Griffmulde 5 angeordnet. Die Informationen IF1 bis IF8 können als Beschriftungsinformationen für die Betätigungsbereiche B1 bis B8 angesehen werden. Die Griffmulde 6 weist also ein durch Licht optisch dargestelltes Bedienfeld IF1 bis IF8, B1 bis B8 auf.

Nähert sich der Finger F einem der Betätigungsbereiche B1 bis B8 ausreichend nahe an, wird dies als eine Betätigung dieses Betätigungsbereichs B1 bis B8 gedeutet. Mit der Betätigung kann mindestens eine jeweilige Aktion ausgelöst werden, z.B. eine Temperatur auf den mit der Information IF1 bis IF8 assoziierten Temperaturwert eingestellt und die zugehörige Information IF1 bis IF8 mittels des LED-Projektors 5 optisch hervorgehoben. Die optische Hervorhebung kann eine hellere Projektion als für die anderen Temperaturwerte dieser Gruppe umfassen.

**Fig.2A** zeigt in einer Seitenansicht einen Ausschnitt aus Fig.1 im Bereich der Griffmulde 4. Der LED-Projektor 5 ist im Bereich einer frontseitigen Platte ("Türplatte" 8) der Griffmulde 4 6- angeordnet. Der LED-Projektor 5 ist muldenseitig von einer leistenartigen Abdeckung 9 abgedeckt, die Lichtdurchtrittsöffnungen 10 aufweist. Je eine Lichtdurchtrittsöffnung 10 befindet sich gegenüber einem der Betätigungsbereiche B1 bis B8. Jede der (Beschriftungs-)Informationen IF1 bis IF8 wird mittels Lichts erzeugt, dass aus der gegenüberliegenden Lichtdurchtrittsöffnung 10 austritt.

**Fig.2B** zeigt in einer Seitenansicht eine Skizze eines LED-Moduls 11 des LED-Projektors 5. Der LED-Projektor 5 kann für jede der beiden Gruppen IF1 bis IF4 und IF5 bis IF8 jeweils ein LED-Modul 11 aufweisen. Jedes der beiden LED-Module weist eine LED 12 auf, deren Licht L mittels einer jeweiligen Optik 13 fokussierbar ist. Den Optiken 13 ist ein jeweiliges bildgebendes Element optisch nachgeschaltet, das hier z.B. als ein statisches Durchlichtelement 14 - beispielsweise in Form einer Schablone oder eines Diapositivs - vorliegt. Mittels der Durchlichtelemente 14 wird dem von einer LED 12 abgestrahlten Licht L die entsprechende Information IF1 bis IF8 aufgeprägt und dann auf die Wandung 6 projiziert.

Die LEDs 12 sind individuell ansteuerbar, insbesondere dimmbar. Dadurch kann die Helligkeit des jeweils abgestrahlten Lichts L eingestellt werden, wie hier durch die unterschiedlich großen Flächen der zugehörigen Pfeile angedeutet. In der gezeigten Darstellung werden die Informationen IF2 und IF7 heller projiziert, da sie den aktuell eingestellten Temperaturen 4°C bzw. -22°C entsprechen. Dies wird dadurch erreicht, dass die zugehörige LED 12 heller strahlt als die anderen LEDs 12. Zu seiner Ansteuerung kann der LED-Projektor mit einer Steuereinrichtung (o. Abb.) des Kühlschranks 1 verbunden sein.

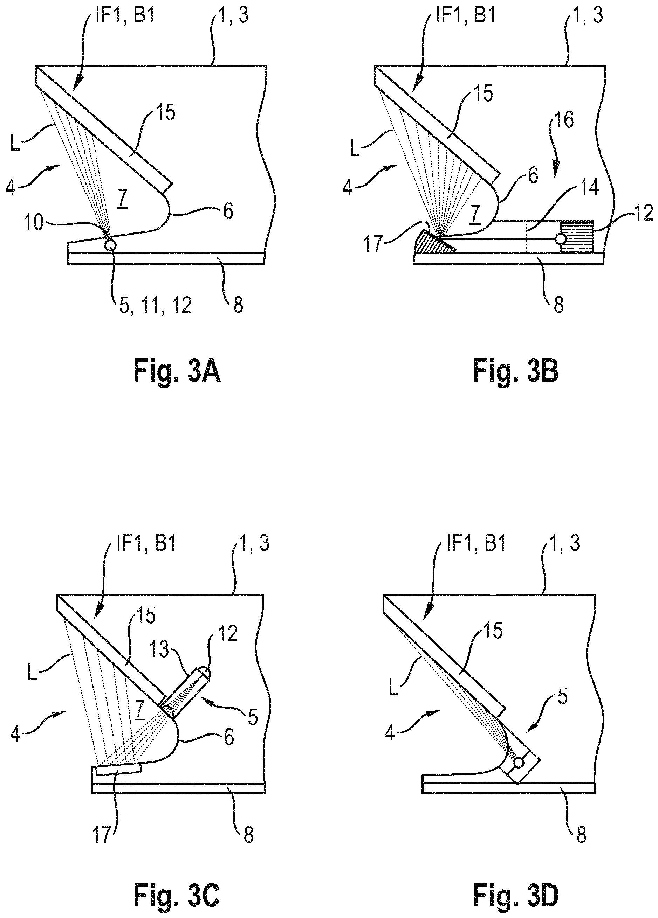

**Fig.3A** zeigt als Schnittdarstellung in Draufsicht einen skizzenartigen Ausschnitt im Bereich der Griffmulde 4 auf Ebene der Information IF1 bzw. des Betätigungsbereichs B1.

Am Ort der Information IF1 bzw. des Betätigungsbereichs B1 kann die Griffmulde 4 eine oberflächliche Lage 15 z.B. aus Holz, Metall, Kunststoff, Glas, Leder usw. aufweisen.

**Fig.3B** zeigt als Schnittdarstellung in Draufsicht eine erste Variante der Tür 3. Die LEDs 12 der LED-Module 16 sind nun seitlich von der Griffmulde 4 versetzt angeordnet. Das von ihnen ausgestrahlte Licht L wird zunächst für eine gewisse Strecke in den Bereich der Griffmulde 4 gestrahlt, hier: parallel zu einer Türfront. Die Strecke kann eine Luftstrecke oder ein Lichtleiter sein. In der Strecke befindet sich das statische Durchlichtelement 14. Im Bereich der Türplatte 8 befindet sich ein Umlenkspiegel 17, mittels dessen das informationsbehaftete Licht L auf die Lage 15 projiziert wird.

**Fig.3C** zeigt als Schnittdarstellung in Draufsicht eine zweite Variante der Tür 3. Hier befindet sich im Gegensatz zu Fig.3B das LED-Modul 16 nicht an der Türplatte 8, sondern neben der Lage 15 und strahlt das Licht L durch den Hohlraum 7 auf einen Umlenkspiegel 17.

**Fig.3D** zeigt als Schnittdarstellung in Draufsicht eine dritte Variante der Tür 3. Hierbei wird auf den Umlenkspiegel 17 verzichtet. Das Licht L fällt direkt, aber stark schräg (ggf. fast streifend) auf die Lage 15. Das LED-Modul 16 kann dabei parallel oder annähernd parallel zu einer freien Oberfläche der Lage 15 ausgerichtet sein.

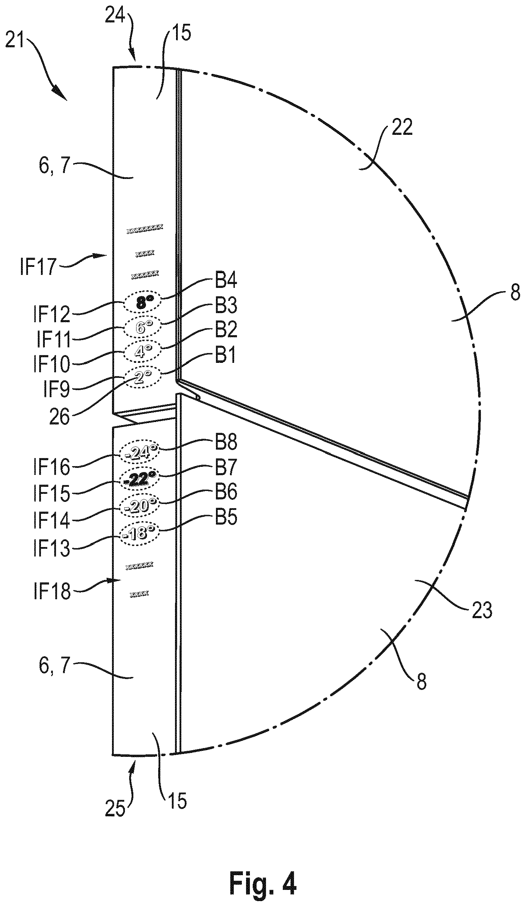

**Fig.4** zeigt in einer Schrägansicht einen Ausschnitt aus einem Haushaltsgerät in Form eines Doppel-Kühlgeräts 21 gemäß einem zweiten Ausführungsbeispiel, und nicht Gegenstand der vorliegenden Erfindung, welches zwei übereinander angeordnete Kälteräume (z.B. einen oberen Kühlraum und einen unteren Gefrierraum) mit einer oberen Tür 22 und einer unteren Tür 23 aufweist. Die Türen 22 und 23 weisen jeweils einen LED-Projektor (o. Abb.) auf, um zugehörigen Informationen IF9 bis IF12 und IF13 bis IF16 auf die zugehörigen Betätigungsbereiche B1 bis B4 bzw. B5 bis B8 jeweiliger Griffmulden 24 bzw. 25 zu projizieren. Zusätzlich werden von den LED-Projektoren Informationen IF17 und IF18 in die Griffmulden 24 bzw. 25 projiziert. Den Informationen IF17 bzw. IF18 können ein oder mehrere Betätigungsbereiche zugeordnet sein, brauchen es aber nicht.

Im Gegensatz zu dem Kühlschrank 1 sind die Informationen IF9 bis IF18 nicht als Beschriftungsinformationen ausgebildet, sondern als Lichtflecke oder Spots. Die Lichtflecke werden lokal auf jeweilige fest an der Lage 15 der jeweiligen Griffmulde 23 und 24 vorhandene Beschriftungen 26 projiziert. Die Beschriftungen 26 können Drucke, Gravuren, Einprägungen usw. sein. Die Beschriftungen 26 entsprechen hier einstellbaren Temperaturwerten sowie weiteren Texten (z.B. "super" oder "Ferien" usw.). In der gezeigten Darstellung werden nur die Beschriftungen 26 "8°" und "-22°" durch Informationen IF12 und IF15 in Form von Spots beleuchtet und damit gezielt hervorgehoben. Die anderen Informationen sind nicht aktiv. Mit Betätigung einer anderen Beschriftung 26 durch einen Nutzer kann diese andere Beschriftung durch Projektion mittels eines Spots hervorgehoben werden.

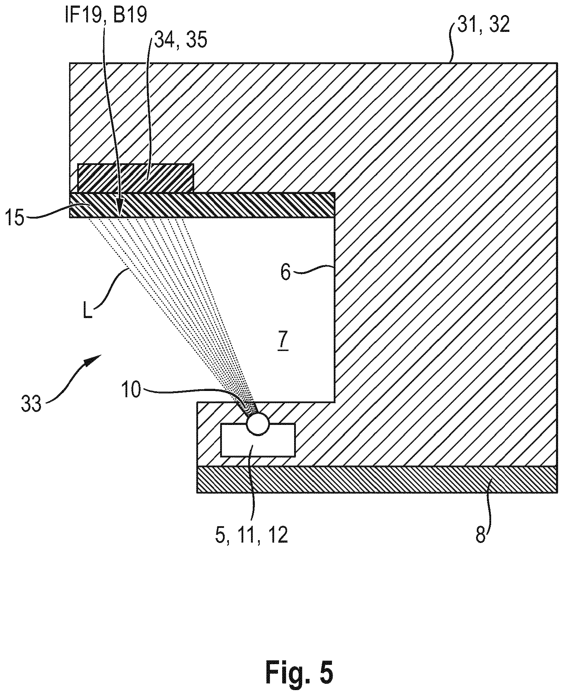

**Fig.5** zeigt als Schnittdarstellung in Draufsicht einen Ausschnitt aus einer Tür 32 eines Kühlschranks 31 gemäß einem dritten Ausführungsbeispiel im Bereich einer Griffmulde 33. Die Tür 32 ist ähnlich zu der Tür 3 aufgebaut, insbesondere gemäß der Ausführungsform nach Fig.3A. Jedoch weist die Tür 32 keinen berührungslos arbeitenden Positions- oder Anwesenheitsdetektor auf, sondern eine Touchfolie 34 mit mehreren berührungsempfindlichen Bereichen, von denen hier ein berührungsempfindlicher Bereich 35 ("Touchfeld") gezeigt ist. Die Touchfolie 34 ist hinter der Lage 15 verbaut, kann alternativ aber auch die freie Oberfläche oder Wandung 6 der Griffmulde 33 stellen. Die Betätigungsbereiche entsprechen Oberflächenbereichen der Lage 15 oberhalb der berührungsempfindlichen Bereiche 35.

Auf die Betätigungsbereiche B19 werden jeweilige (Beschriftungs-) Informationsbereiche IF19 projiziert, z.B. mit Beschriftungen, die Temperaturwerten oder anderen Betriebsparametern entsprechen usw. Eine Betätigung eines Betätigungsbereichs B19 kann mittels der Touchfolie 34 durch seine Berührung erkannt werden.

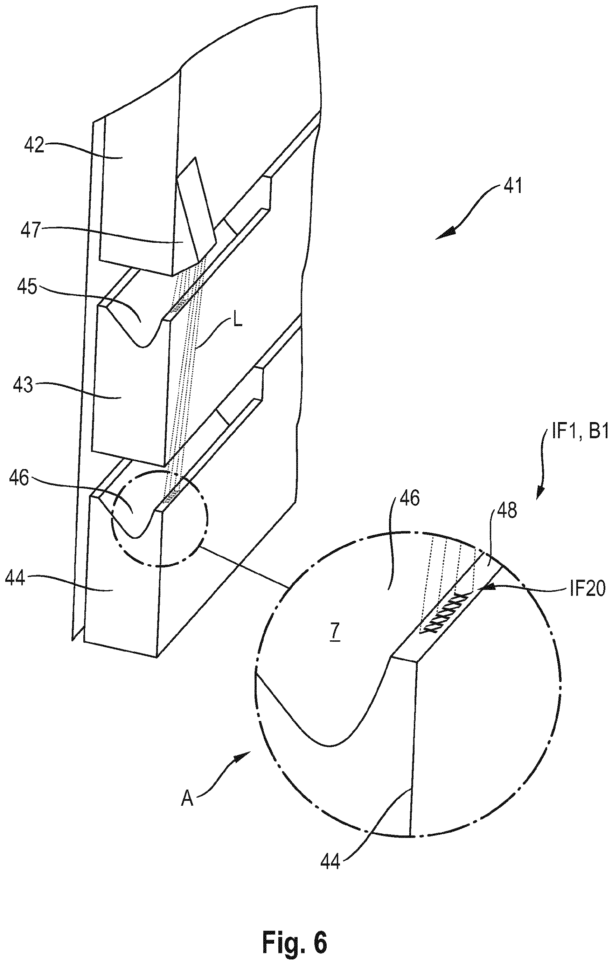

**Fig.6** zeigt in einer Schrägansicht einen Ausschnitt aus einem Haushaltsgerät in Form eines Kühlgeräts 41. Das Kühlgerät 41 weist mehrere übereinander angeordnete Türen 42, 43 und 44 auf, von denen die beiden unteren Türen 43 und 44 jeweils als Schubladentüren ausgebildet sind und oberseitige Griffmulden 45 bzw. 46 aufweisen. Die oberste Tür 42 weist eine Projektionseinrichtung 47 auf, die Licht als Information IF20 von oben auf die Oberseiten oder oberen Türränder der darunterliegenden Türen 43 und 44 projizieren kann. Die Projektionseinrichtung 47 strahlt also ihr Licht L von außerhalb der Griffmulde 46 ab.

Wie anhand der Vergrößerung A dargestellt, wird die Information IF20 nicht in den Hohlraum 7 der Griffmulde 46 projiziert, sondern auf eine Griffkante 48 der Griffmulde 46. Die Griffkante 48 der Griffmulde 46 kann entsprechende Betätigungselemente (insbesondere berührungsempfindliche Betätigungselemente) aufweisen, braucht es aber nicht. Alternativ oder zusätzlich kann die Projektionseinrichtung 47 ihr Licht L in den Hohlraum 7 strahlen, also durch eine Eingriffsöffnung der Griffmulde 46 hindurch.

Selbstverständlich ist die vorliegende Erfindung nicht auf das gezeigte Ausführungsbeispiel beschränkt.

So können anstelle eines oder mehrerer LED-Projektoren ein oder mehrere Laserprojektoren verwendet werden.

Auch können anstelle von statischen Durchlichtelementen bildvariable Durchlichtelemente verwendet werden, z.B. ein LCD-Bildschirm.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kühlschrank
- 2: Korpus
- 3: Tür
- 4: Griffmulde
- 5: LED-Projektor
- 6: Wandung der Griffmulde
- 7: Hohlraum der Griffmulde
- 8: Türplatte
- 9: Abdeckung
- 10: Lichtdurchtrittsöffnung
- 11: LED-Modul
- 12: LED
- 13: Optik
- 14: Durchlichtelement
- 15: Lage
- 16: LED-Modul
- 17: Umlenkspiegel
- 21: Doppel-Kühlschrank
- 22: Tür
- 23: Tür
- 24: Griffmulde
- 25: Griffmulde
- 26: Beschriftung
- 31: Kühlschrank
- 32: Tür
- 33: Griffmulde
- 34: Touchfolie
- 35: Berührungsempfindlicher Bereich
- 41: Kühlgerät
- 42: Tür
- 43: Tür
- 44: Tür
- 45: Griffmulde
- 46: Griffmulde
- 47: Projektionseinrichtung
- 48: Griffkante der Griffmulde
- B1-B19: Betätigungsbereich
- IF1 - IF20: Projizierte Information
- F: Finger
- L: Licht

## Patentansprüche

1. Haushaltsgerät (1; 31; 41), insbesondere Kältegerät, aufweisend eine Tür (3; 32; 43, 44) mit einer Griffmulde (4; 33; 45, 46, 48) und eine Beleuchtungseinrichtung zur Einstrahlung von Licht (L) auf die Griffmulde (4; 33; 45, 46, 48), wobei die Beleuchtungseinrichtung eine Projektionseinrichtung (5; 47) zur Projektion von Information (IF1-IF8; IF19; IF20) auf die Griffmulde (4; 33; 45, 46, 48) aufweist, **dadurch gekennzeichnet, dass** die Griffmulde (4; 33; 45, 46, 48) als eine Bedieneinrichtung mit mindestens einem Betätigungsbereich (B1-B8, B19) zur Bedienung des Haushaltsgeräts (1; 31; 41) eingerichtet ist, wobei mittels der Projektionseinrichtung (5; 47) Beschriftungsinformation (IF1-IF8; IF19;IF20) auf einen jeweiligen Betätigungsbereich (B1-B8, B19) für dessen Beschriftung projizierbar ist.

2. Haushaltsgerät (1; 31) nach Anspruch 1, **dadurch gekennzeichnet, dass** die Projektionseinrichtung (5) in die Tür (3; 32) integriert ist, insbesondere in einen die Griffmulde (4; 33) aufweisenden Randbereich der Tür (3; 32).

3. Haushaltsgerät (41) nach einem der vorhergehenden Ansprüche, **dadurch gekennzeichnet, dass** die Projektionseinrichtung (47) außerhalb der Griffmulde (45, 46, 48) Licht (L) abstrahlt und von ihr abgestrahltes Licht (L) durch eine Eingriffsöffnung der Griffmulde (45, 46) in die Griffmulde (45, 46) fällt.

4. Haushaltsgerät (1; 31; 41) nach einem der vorhergehenden Ansprüche, **dadurch gekennzeichnet, dass** die Projektionseinrichtung (5; 47) mindestens eine Leuchtdiode (12) aufweist, der ein bildgebendes Element (14) optisch nachgeschaltet ist.

5. Haushaltsgerät (1; 31; 41) nach Anspruch 4, **dadurch gekennzeichnet, dass** das bildgebende Element ein statisches Durchlichtelement (14) ist.

6. Haushaltsgerät (1; 31; 41) nach Anspruch 4, **dadurch gekennzeichnet, dass** das bildgebende Element ein bildvariables Durchlichtelement ist.

7. Haushaltsgerät (1; 31; 41) nach einem der vorhergehenden Ansprüche, **dadurch gekennzeichnet, dass** die Projektionseinrichtung (5) als ein Laserprojektor oder als ein LED-Projektor ausgebildet ist.

8. Haushaltsgerät (1; 31; 41) nach einem der vorhergehenden Ansprüche, **dadurch gekennzeichnet, dass** mehrere Betätigungsbereiche (B1-B8, B19) in einer Reihe entlang einer Längserstreckung der Griffmulde (4; 33) angeordnet sind.

9. Haushaltsgerät (1; 31) nach einem der vorhergehenden Ansprüche, **dadurch gekennzeichnet, dass** das Haushaltsgerät (1; 21; 31)
- einen Positionsdetektor (34) zum Erkennen einer Position eines in die Griffmulde (4; 33) eingeführten Objekts (F) aufweist und
- dazu eingerichtet ist, die Position des in die Griffmulde (4; 33) eingeführten Objekts (F) relativ zu mindestens einem Betätigungsbereich (B1-B8, B19) zu bestimmen und eine Aktion auszulösen, falls das Objekt (F) den Betätigungsbereich (B1-B8, B19) erreicht.

10. Haushaltsgerät (1) nach einem der Ansprüche 8 oder 9, **dadurch gekennzeichnet, dass** der Positionsdetektor mehrere entlang einer Längserstreckung der Griffmulde angeordnete Lichtschranken aufweist.

11. Haushaltsgerät (1) nach einem der Ansprüche 8 oder 9, **dadurch gekennzeichnet, dass** der Positionsdetektor mindestens einen IR-Sensor aufweist.

12. Haushaltsgerät (31) nach einem der Ansprüche 8 oder 9, **dadurch gekennzeichnet, dass** der Positionsdetektor (34) mehrere berührungsempfindliche Bereiche (35, B19) aufweist, auf welche jeweilige Informationsbereiche (IF19) projizierbar sind.

13. Verfahren zum Betreiben eines Haushaltsgeräts (1;31; 41), das eine Tür (3; 32; 43, 44) mit einer Griffmulde (4; 33; 45, 46, 48) und eine Projektionseinrichtung (5; 47) zur Einstrahlung von Licht (L) auf die Griffmulde (4; 33; 45, 46; 47) aufweist, wobei bei dem Verfahren mittels der Projektionseinrichtung (5; 47) Information (IF1-IF8; IF19;IF20) auf die Griffmulde (4; 33; 45, 46, 48) projiziert wird, wobei die Griffmulde (4; 33; 45, 46, 48) als eine Bedieneinrichtung mit mindestens einem Betätigungsbereich (B1-B8, B19) zur Bedienung des Haushaltsgeräts (1; 31; 41) eingerichtet ist, wobei mittels der Projektionseinrichtung (5; 47) Beschriftungsinformation (IF1-IF8; IF19;IF20) auf einen jeweiligen Betätigungsbereich (B1-B8, B19) für dessen Beschriftung projiziert wird.

## Claims

1. Household appliance (1; 31; 41), in particular a refrigeration appliance, having a door (3; 32; 43, 44) with a recessed handle (4; 33; 45, 46, 48) and an illumination device for shining light (L) onto the recessed handle (4; 33; 45, 46, 48), wherein the illumination device has a projection device (5; 47) for projecting information (IF1-IF8; IF19; IF20) onto the recessed handle (4; 33; 45, 46, 48), **characterised in that** the recessed handle (4; 33; 45, 46, 48) is set up as an operating device with at least one actuation region (B1-B8, B 19) for operating the household appliance (1; 32; 41), wherein labelling information (IF1-IF8; IF19; IF20) can be projected, by means of the projection device (5; 47), onto a respective actuation region (B1-B8, B19) for the labelling thereof.

2. Household appliance (1; 31) according to claim 1, **characterised in that** the projection device (5) is integrated into the door (3; 32), in particular into an edge region of the door (3; 32) having the recessed handle (4; 33).

3. Household appliance (41) according to one of the preceding claims, **characterised in that** the projection device (47) radiates light (L) outside the recessed handle (45, 46, 48), and light (L) that it radiates falls into the recessed handle (45, 46) through an engagement opening in the recessed handle (45, 46).

4. Household appliance (1; 31; 41) according to one of the preceding claims, **characterised in that** the projection device (5; 47) has at least one light-emitting diode (12), downstream of which, from an optical point of view, there is an image-creating element (14).

5. Household appliance (1; 31; 41) according to claim 4, **characterised in that** the image-creating element is a static light-transmitting element (14).

6. Household appliance (1; 31; 41) according to claim 4, **characterised in that** the image-creating element is an image-variable light-transmitting element.

7. Household appliance (1; 31; 41) according to one of the preceding claims, **characterised in that** the projection device (5) takes the form of a laser projector or an LED projector.

8. Household appliance (1; 31; 41) according to one of the preceding claims, **characterised in that** a plurality of actuation regions (B1-B8, B19) are arranged in a line along a longitudinal extent of the recessed handle (4; 33).

9. Household appliance (1; 31) according to one of the preceding claims, **characterised in that** the household appliance (1; 21; 31)
- has a position detector (34) for detecting a position of an object (F) introduced into the recessed handle (4; 33), and
- is set up to determine the position of the object (F) introduced into the recessed handle (4; 33) in relation to at least one actuation region (B1-B8, B19), and to trigger an action if the object (F) reaches the actuation region (B1-B8, B19).

10. Household appliance (1) according to one of claims 8 or 9, **characterised in that** the position detector has a plurality of light barriers arranged along a longitudinal extent of the recessed handle.

11. Household appliance (1) according to one of claims 8 or 9, **characterised in that** the position detector has at least one IR sensor.

12. Household appliance (31) according to one of claims 8 or 9, **characterised in that** the position detector (34) has a plurality of touch-sensitive regions (35, B19) onto which respective information regions (IF19) may be projected.

13. Method for operating a household appliance (1; 31; 41) that has a door (3; 32; 43, 44) with a recessed handle (4; 33; 45, 46, 48) and a projection device (5; 47) for shining light (L) onto the recessed handle (4; 33; 45, 46; 47), wherein in the method information (IF1-IF8; IF19; IF20) is projected onto the recessed handle (4; 33; 45, 46, 48) by means of the projection device (5; 47), wherein the recessed handle (4; 33; 45, 46, 48) is set up as an operating device with at least one actuation region (B1-B8, B19) for operating the household appliance (1; 31; 41), wherein labelling information (IF1-IF8; IF19; IF20) is projected, by means of the projection device (5; 47), onto a respective actuation region (B1-B8, B19) for the labelling thereof.

## Revendications

1. Appareil ménager (1; 31; 41), en particulier appareil frigorifique, présentant une porte (3; 32; 43, 44) avec une poignée concave (4; 33; 45, 46, 48) et un dispositif d'éclairage pour l'irradiation de lumière (L) sur la poignée concave (4; 33; 45, 46, 48), dans lequel le dispositif d'éclairage présente un dispositif de projection (5; 47) pour la projection d'informations (IF1-IF8; IF19; IF20) sur la poignée concave (4; 33; 45, 46, 48), **caractérisé en ce que** la poignée concave (4; 33; 45, 46, 48) est aménagée sous la forme d'un dispositif de commande avec au moins une zone d'actionnement (B1-B8, B19) pour la commande de l'appareil ménager (1; 31; 41), dans lequel des informations d'étiquetage (IF1-IF8; IF19; IF20) peuvent être projetées au moyen du dispositif de projection (5; 47) sur une zone d'actionnement respective (B1-B8, B19) pour son étiquetage.

2. Appareil ménager (1; 31) selon la revendication 1, **caractérisé en ce que** le dispositif de projection (5) est intégré à la porte (3; 32), en particulier à une zone périphérique de la porte (3; 32) présentant la poignée concave (4; 33).

3. Appareil ménager (41) selon l'une des revendications précédentes, **caractérisé en ce que** le dispositif de projection (47) émet de la lumière (L) en dehors de la poignée concave (45, 46, 48) et la lumière (L) qu'il émet tombe sur la poignée concave (45, 46) par une ouverture de saisie de la poignée concave (45, 46).

4. Appareil ménager (1; 31; 41) selon l'une des revendications précédentes, **caractérisé en ce que** le dispositif de projection (5; 47) présente au moins une diode électroluminescente (12) disposée optiquement en aval d'un élément émetteur d'images (14).

5. Appareil ménager (1; 31; 41) selon la revendication 4, **caractérisé en ce que** l'élément émetteur d'images est un élément à lumière transmise statique (14).

6. Appareil ménager (1; 31; 41) selon la revendication 4, **caractérisé en ce que** l'élément émetteur d'images est un élément à lumière transmise à image variable.

7. Appareil ménager (1; 31; 41) selon l'une des revendications précédentes, **caractérisé en ce que** le dispositif de projection (5) est formé sous la forme d'un projecteur laser ou sous la forme d'un projecteur LED.

8. Appareil ménager (1; 31; 41) selon l'une des revendications précédentes, **caractérisé en ce que** plusieurs zones d'actionnement (B1-B8, B19) sont disposées en ligne le long d'une étendue longitudinale de la poignée concave (4; 33).

9. Appareil ménager (1; 31) selon l'une des revendications précédentes, **caractérisé en ce que** l'appareil ménager (1; 21; 31)
- présente un détecteur de position (34) pour la détection d'une position d'un objet (F) introduit dans la poignée concave (4; 33) et
- est aménagé afin de déterminer la position de l'objet (F) introduit dans la poignée concave (4; 33) par rapport à au moins une zone d'actionnement (B1-B8, B19) et de déclencher une action dans le cas où l'objet (F) atteint la zone d'actionnement (B1-B8, B19).

10. Appareil ménager (1) selon l'une des revendications 8 ou 9, **caractérisé en ce que** le détecteur de position présente plusieurs barrières photoélectriques disposées le long d'une étendue longitudinale de la poignée concave.

11. Appareil ménager (1) selon l'une des revendications 8 ou 9, **caractérisé en ce que** le détecteur de position présente au moins un capteur IR.

12. Appareil ménager (31) selon l'une des revendications 8 ou 9, **caractérisé en ce que** le détecteur de position (34) présente plusieurs zones tactiles (35, B19) sur lesquelles des zones d'information respectives (IF19) peuvent être projetées.

13. Procédé d'exploitation d'un appareil ménager (1; 31; 41), qui présente une porte (3; 32; 43, 44) avec une poignée concave (4; 33; 45, 46, 48) et un dispositif de projection (5; 47) pour l'irradiation de lumière (L) sur la poignée concave (4; 33; 45, 46, 47), dans lequel dans le procédé, des informations (IF1-IF8; IF19; IF20) sont projetées sur la poignée concave (4; 33; 45, 46, 48) au moyen du dispositif de projection (5; 47), dans lequel la poignée concave (4; 33; 45, 46, 48) est aménagée sous la forme d'un dispositif de commande avec au moins une zone d'actionnement (B1-B8, B19) pour la commande de l'appareil ménager (1; 31; 41), dans lequel des informations d'étiquetage (IF1-IF8; IF19; IF20) sont projetées au moyen du dispositif de projection (5; 47) sur une zone d'actionnement respective (B1-B8, B19) pour son étiquetage.
